# EUROPEAN PATENT APPLICATION

(11) **EP 4 711 061 A1**
(43) Date of publication of application: **18.03.2026**
(21) Application number: 25180384.7
(22) Date of filing: 03.06.2025
(51) Int. Cl.: B22F 10/31, B22F 10/28, B22F 10/50, B22F 12/17, B22F 12/90, B33Y 10/00, B33Y 30/00, B33Y 50/02, C22C 33/02

(54) **METHOD AND APPARATUS FOR ADDITIVE MANUFACTURING**

(30) Priority: 12.09.2024 JP 2024157913
(71) Applicant: Sodick Co., Ltd., Kanagawa 224-8522 (JP)
(72) Inventor: MATSUMOTO, Itaru, Kanagawa, 224-8522 (JP)
(74) Representative: Becker, Eberhard

(57) **Abstract**

An additive manufacturing method includes a heating step, a manufacturing step, a cooling step, a cutting step, a first correction step, and a second correction step. In the heating step, a build table (22) is heated to a preheating temperature. In the manufacturing step, a solidified layer is formed. In the cooling step, the build table is cooled to a cooling temperature. In the cutting step, a cutting process is performed on the solidified layer. In a first correction step executed after the heating step and before the manufacturing step, a positional misalignment of the base plate (61) is measured, and a coordinate system used in the manufacturing step is corrected. In a second correction step executed after the cooling step and before the cutting step, a positional misalignment of the base plate is measured, and a coordinate system used in the cutting step is corrected.

## Description

### BACKGROUND

### Technical Field

The invention relates to a method and apparatus for additive manufacturing.

### Description of Related Art

Various methods are known for additive manufacturing of three-dimensional objects. For example, an additive manufacturing apparatus that performs powder bed fusion forms a material layer by leveling powdered material, and forms a solidified layer by irradiating the material layer with a laser beam or an electron beam to sinter or melt the material. By repeating the formation of the material layer and the formation of the solidified layer and laminating multiple solidified layers, a desired three-dimensional object is manufactured. Generally, the three-dimensional object is formed by using, as a base, a plate-like member referred to as base plate. The base plate is fixed to a build table configured to be movable in the vertical direction, and material layers and solidified layers are formed on the base plate. In forming the solidified layer, the build table may be heated to a predetermined temperature and the material layer is preheated for the purpose such as stress relief.

To obtain a three-dimensional object with higher precision, a cutting process may be performed on the end face of the solidified layer during additive manufacturing. Also, for various purposes, cooling of the solidified layer may be performed during additive manufacturing. For example, when metal is used as the material, an additive manufacturing method is known in which the solidified layer is cooled under a predetermined temperature condition during additive manufacturing to intentionally advance martensitic transformation, thereby controlling a residual stress generated in the three-dimensional object by reducing the tensile stress due to metal shrinkage resulting from a compressive stress due to martensitic transformation.

U.S. Patent No. 11,014,164B2 discloses an additive manufacturing method that performs cooling of the solidified layer, a cutting process on the solidified layer, and reheating of the solidified layer every time when a predetermined number of solidified layers are formed. In the additive manufacturing method, the temperature of the build table is set to be relatively high during the formation of the solidified layer, and the temperature of the build table is set to be relatively low during the cutting process.

### SUMMARY

### [Issues to be solved by the invention]

During additive manufacturing, repeatedly heating and cooling the build table may cause positional misalignment in the horizontal direction or the rotational direction between the build table and the base plate because of thermal displacement. Although the positional misalignment can be suppressed by fixing the center of the displacement of the build table and the center of the displacement of the base plate at one point, such fixation is practically difficult.

Although it can be considered to set a larger machining allowance in anticipation of the positional misalignment, such process requires extra time for manufacturing and processing. There is also a risk that positional misalignment occurs at a position further to the anticipation, which may result in portions where dimensions are insufficient and cutting processes cannot be performed, or portions with an excessive material that increases the load on the tool.

The invention has been made in view of such circumstances and aims to provide an additive manufacturing method and an additive manufacturing apparatus capable of suppressing adverse effects due to the positional misalignment between the build table and the base plate caused by thermal displacement.

### [Means for solving the issues]

According to the disclosure, an additive manufacturing method is provided. The additive manufacturing method includes: a heating step of heating a build table to which a base plate is fixed to a preheating temperature; a manufacturing step of alternately and repetitively forming a material layer by supplying a material onto the build table to form a material layer and forming a solidified layer by irradiating the material layer heated to the preheating temperature with a laser beam or an electron beam to form a predetermined number of the solidified layers; a cooling step of cooling the build table to a cooling temperature lower than the preheating temperature; a cutting step of performing a cutting process on an end surface of the solidified layer cooled to the cooling temperature; a first correction step of measuring, by using a measuring device, positional misalignments of the base plate in a horizontal direction and a rotational direction and correcting a coordinate system used in the manufacturing step, wherein the first correction step is executed after the heating step and before the manufacturing step; and a second correction step of measuring, by using the measuring device, positional misalignments of the base plate in the horizontal direction and the rotational direction and correcting a coordinate system used in the cutting step, wherein the second correction step is executed after the cooling step and before the cutting step.

According to the disclosure, an additive manufacturing apparatus is provided. The additive manufacturing apparatus includes: a build table, to which a base plate is fixed; a thermal adjuster, heating the build table to a preheating temperature or cooling the build table to a cooling temperature lower than the preheating temperature; a material layer former, supplying a material onto the build table to form a material layer; an irradiator, irradiating the material layer heated to the preheating temperature with a laser beam or an electron beam to form a solidified layer; a processing device, performing a cutting process on an end surface of the solidified layer cooled to the cooling temperature; a measuring device, configured to be able to measure positional misalignments of the base plate in a horizontal direction and a rotational direction; and a controller, correcting a coordinate system used for control of the irradiator based on the positional misalignment measured by the measuring device from a time when the build table is heated to the preheating temperature until a time when the solidified layer is formed, and correcting a coordinate system used for control of the processing device based on the positional misalignment measured by the measuring device from a time when the build table is cooled to the cooling temperature until a time when the cutting process is performed on an end surface of the solidified layer.

### [Inventive effects]

In the additive manufacturing method and the additive manufacturing apparatus of the invention, after temperature adjustment of the build table, the positional misalignment of the base plate is measured and the coordinate system is corrected. Accordingly, it is possible to form the solidified layer and perform the cutting process on the solidified layer while suppressing the effects of positional misalignment caused by thermal displacement.

### BRIEF DESCRIPTION OF THE DRAWINGS

FIG. 1 is a schematic configuration view of an additive manufacturing apparatus.
FIG. 2 is an exploded view of a build table and a thermal adjuster.
FIG. 3 is a schematic configuration diagram of an irradiator.
FIG. 4 is a perspective view of a solidified layer and a measurement reference object formed on a base plate.
FIG. 5 shows a modification example of the measurement reference object.
FIG. 6 is an enlarged view of the measurement reference object on which a reference mark is formed.
FIG. 7 is an enlarged view of the measurement reference object with a reference surface formed by a cutting process.
FIG. 8 shows a modification example of the measurement reference object.
FIG. 9 is a block diagram of a controller.
FIG. 10 is a flowchart of an additive manufacturing method.
FIG. 11 shows an example of a measurement position in a case of measuring the reference mark.
FIG. 12 shows an example of a measurement position in a case of measuring the reference surface.

### DESCRIPTION OF THE EMBODIMENTS

The embodiments of the invention will be described below using the drawings. Various modification examples described below may be implemented in any combination.

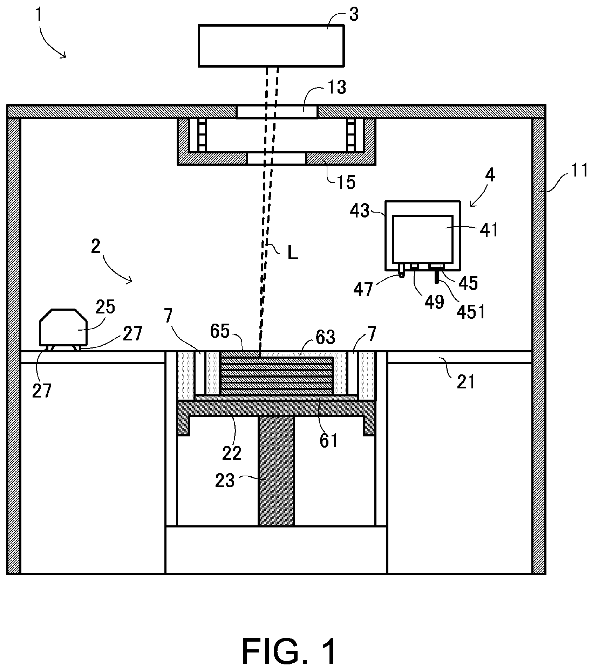

An additive manufacturing apparatus 1 of the embodiment shown in FIG. 1 is, specifically, an apparatus that performs powder bed fusion, and manufactures a desired three-dimensional object by alternately repeating the formation of a material layer 63 and the formation of a solidified layer 65. As a material, for example, metal powder is used. The additive manufacturing apparatus 1 includes a chamber 11, a material layer former 2, a build table 22, an irradiator 3, a processing device 4, a removal nozzle 47, a measuring device 49, and a controller 5.

The additive manufacturing apparatus 1 of the embodiment is controlled by the controller 5 based on a predetermined coordinate system. The coordinate system may be a Cartesian coordinate system, and in the following, the mutually orthogonal horizontal axis directions are referred to as X-axis and Y-axis, respectively. In the embodiment, one coordinate system is shared as the coordinate system used for control related to the formation of the solidified layer 65 of the irradiator 3 and the coordinate system used for control related to the cutting process of the processing device 4. However, the coordinate system used for controlling the irradiator 3 (hereinafter, "optical coordinate system") and the coordinate system used for controlling the processing device 4 (hereinafter, cutting coordinate system) may be provided separately. At this time, the optical coordinate system and the cutting coordinate system are set to be aligned with each other.

The chamber 11 is configured to be substantially sealed and covers a build region where a desired three-dimensional object is manufactured. During additive manufacturing, inert gas is supplied to the chamber 11 from an inert gas supply device (not shown), and the chamber 11 is filled with inert gas at a predetermined concentration. The inert gas supply device is, for example, an inert gas generator that generates inert gas from air or a gas cylinder in which inert gas is stored. In addition, inert gas containing fumes generated during the formation of the solidified layer 65 is discharged from the inside of the chamber 11. The inert gas discharged from the chamber 11 is returned to the inside of the chamber 11 after the fumes are removed by a fume collector (not shown). The fume collector is, for example, an electrostatic precipitator or a filter. Inert gas refers to gas that does not substantially react with the material layer 63 or the solidified layer 65, and the inert gas is selected as appropriate from nitrogen gas, argon gas, helium gas, etc., according to the type of material.

The material layer former 2 is provided inside the chamber 11 and forms the material layer 63 of a desired thickness on the build region on the build table 22. The material layer former 2 includes a base platform 21, a recoater head 25, a recoater head driving device 26, and a blade 27.

The base platform 21 has a build region. The build table 22 is disposed in the build region and is configured to be movable in the vertical direction by a build table driving device 23 having any actuator. The build table 22 and tank walls surrounding the build table 22 retain unsolidified material. As the additive manufacturing progresses, the base plate 61 and the solidified layer 65 become buried in the unsolidified material. During additive manufacturing, the base plate 61 is placed on the upper surface of the build table 22, and the material layer 63 and the solidified layer 65 are formed on the base plate 61. The base plate 61 may be a plate-like member of ay shape, and in the embodiment, the base plate 61 has a rectangular shape. The base plate 61 may be fixed to the build table 22 by any fixing tools, and typically mechanical fixing tools such as bolts or clamps are used, but the invention is not limited thereto.

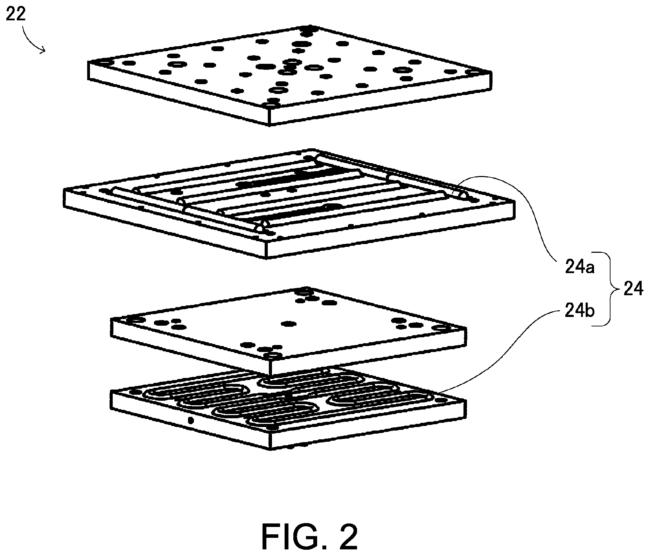

The build table 22 is configured to be able to control the temperature. In the embodiment, as shown in FIG. 2, the thermal adjuster 24 is built into the build table 22. The thermal adjuster 24 includes at least one of a heater 24a and a cooler 24b. The heater 24a is, for example, an electric heater or a pipe through which a heating medium can flow. The cooler 24b is, for example, a pipe through which a cooling medium can flow. The thermal adjuster 34 is configured to be able to heat the build table 22 to a predetermined preheating temperature and cool the build table 22 to a predetermined cooling temperature that is lower than the heating temperature. In the specification, "heating" refers to adjusting to a relatively high temperature, and "cooling" refers to adjusting to a relatively low temperature. When forming the solidified layer 65, the temperature of the build table 22 is adjusted to the preheating temperature. At the time of performing the cutting process on the end face of the solidified layer 65, the temperature of the build table 22 is adjusted to the cooling temperature. When performing temperature adjustment to the build table 22 for the purpose of intentionally advancing martensitic transformation and controlling the residual stress generated in the three-dimensional object by reducing the tensile stress due to metal shrinkage by using the compressive stress due to martensitic transformation, the preheating temperature may be higher than the martensitic transformation finish temperature of the solidified layer 65, and the cooling temperature may be lower than the martensitic transformation start temperature of the solidified layer 65. Also, the cooling temperature may be, for example, room temperature. In the specification, room temperature refers to a temperature substantially 5°C or higher and 35°C or lower. When temperature adjustment of the build table 22 is performed, thermal displacement may cause positional misalignment at the fixing position of the base plate 61, or positional misalignment of the build table 22 or the peripheral members thereof. Consequently, relative positional misalignment in the horizontal direction or rotational direction may occur between the build table 22 and the base plate 61.

The recoater head 25 is placed on the base platform 21 and is configured to be capable of reciprocally moving in the horizontal direction over the build table 22 by using the recoater head driving device 26 having any actuator. One or multiple blades 27 are attached to one or both side surfaces of the recoater head 25. It suffices as long as the recoater head 25 is capable of moving at least the blades 27. In the embodiment, the recoater head 25 is configured to be movable while discharging the material stored inside. As the recoater head 25 moves, the material supplied on the build table 22 is leveled by the blade 27, and a material layer 63 of a predetermined thickness is formed.

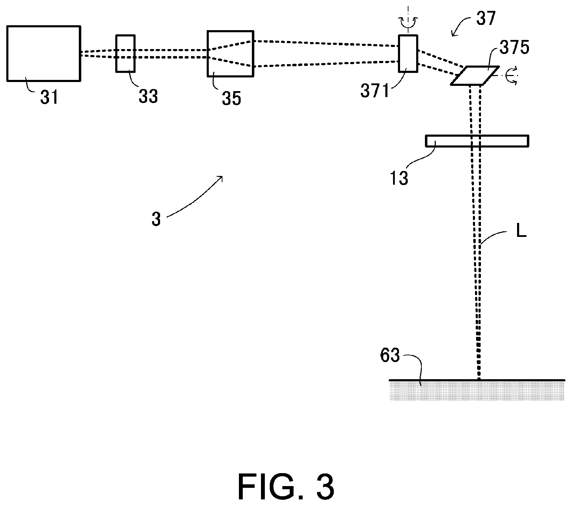

The irradiator 3 is provided above the chamber 11. The irradiator 3 irradiates the material layer 63 with a laser beam L to melt or sinter the material layer 63, thus forming the solidified layer 65. The irradiator 3 of the embodiment includes, as shown in FIG. 3, a beam source 31, a collimator 33, a focus control unit 35, and a scanner 37.

The beam source 31 generates the laser beam L. Here, the laser beam L is not limited to any specific type as long as it can sinter or melt the material layer 63, and may be, for example, fiber laser, CO² laser, YAG laser, green laser, or blue laser. The collimator 33 converts the laser beam L output from the beam source 31 into parallel light. The focus control unit 35 includes a focus adjustment lens, a lens actuator that moves the focus adjustment lens forward or backward, and a condensing lens fixed at a predetermined position. The laser beam L output from the beam source 31 passes through the focus adjustment lens and the condensing lens, and is adjusted to a desired spot diameter. The scanner 37 is, for example, a galvano scanner. The scanner 37 includes an X-axis galvano mirror 371, an X-axis actuator 373 that rotates the X-axis galvano mirror 371, a Y-axis galvano mirror 375, and a Y-axis actuator 377 that rotates the Y-axis galvano mirror 375. The rotation angles of the X-axis galvano mirror 371 and the Y-axis galvano mirror 375 are controlled to perform two-dimensional scanning of the laser beam L output from the beam source 31.

The laser beam L that passes through the X-axis galvano mirror 371 and the Y-axis galvano mirror 375 transmits through a window 13 provided on the upper surface of the chamber 11 and is irradiated onto the material layer 63 formed in the manufacturing region. The window 13 is formed with a material through which the laser beam L can transmit. For example, in the case where the laser beam L is a fiber laser or YAG laser, the window 13 can be formed of quartz glass.

A contamination prevention device 15 is provided on the upper surface of the chamber 11 to cover the window 13. The contamination prevention device 15 includes a cylindrical housing and a cylindrical diffusion member disposed inside the housing. An inert gas supply space is provided between the housing and the diffusion member. Also, an opening is provided in the bottom surface of the housing on the inner side of the diffusion member. The diffusion member is provided with numerous fine pores, and clean inert gas supplied to the inert gas supply space fills a clean room through the fine pores. Then, the clean inert gas that fills the clean room is ejected downward through the opening of the contamination prevention device 15. In this way, fume adhesion to the window 13 is prevented.

Although the irradiator 3 of the embodiment is configured to form the solidified layer 65 by irradiating the laser beam L, the irradiator may also irradiate an electron beam. For example, the irradiator may be configured to include a cathode electrode that emits electrons, an anode electrode that converges and accelerates the electrons, a solenoid that forms a magnetic field to converge the electron beam in one direction, and a collector electrode that is electrically connected to the material layer 63, which is the irradiation target, and applies a voltage between the collector electrode and the cathode electrode.

The processing device 4 performs a cutting process on an end face, etc., of the solidified layer 65. The processing device 4 includes a processing head 41, a processing head driving device 43, a spindle 45, a cutting tool 451, and a removal nozzle 47. The processing head 41 is configured to be movable to a desired position in the chamber 11 by using the processing head driving device 43. The processing head driving device 43 is configured to include, for example, an X-axis driving device that moves the processing head 41 in X-axis direction, a Y-axis driving device that moves the processing head 41 in Y-axis direction, and a Z-axis driving device that moves the processing head 41 in the vertical direction. The X-axis driving device, the Y-axis driving device, and the Z-axis driving device may each include any type of actuator. The spindle 45 is provided on the processing head 41 and is configured to be able to hold and rotate a cutting tool 451 such as an end mill. The cutting tool 451 rotated by the spindle 45 performs a cutting process on the surface or an unnecessary portion of the solidified layer 65. An automatic tool changer may be provided to replace the cutting tool 451 as needed during additive manufacturing. The removal nozzle 47 is provided on the processing head 41 and is a nozzle configured to remove the material through suction or by ejecting an inert gas. By removing the material around the region where the cutting process is performed with the removal nozzle 47, it is possible to prevent the material from becoming caught in the cutting tool 451. In the case of removing the material by ejecting an inert gas, the inert gas may be ejected at a low pressure that does not cause the material to fly up.

The measuring device 49 is a sensor that measures the positional misalignment of the base plate 61 in the horizontal direction and the rotational direction. The measuring device 49 may be an optical sensor such as a CCD camera, or a contact sensor such as a touch probe. In the embodiment, the measuring device 49 is configured to be movable by the processing head 41. When the measuring device 49 is an optical sensor, the measuring device 49 may be provided on the lower surface of the processing head 41. When the measuring device 49 is a contact sensor, the measuring device 49 may be held by the spindle 45 and may be attached in place of the cutting tool 451 by the automatic tool changer. Although a dedicated driving device for moving the processing head 41 may be provided, by installing the measuring device 49 to the processing head 41 or configuring the measuring device 49 to be attachable to the processing head 41, the processing head 41 can also serve as the driving device of the measuring device 49. If the measuring device 49 is an optical sensor and capable of capturing the images of all the measurement targets at once, the measuring device 49 may be fixed inside the chamber 11.

When measuring the positional misalignment of the base plate 61, the measuring device 49 may directly measure the base plate 61, measure the solidified layer 65, or measure a measurement reference object 7 formed on the base plate 61. The measurement reference object 7 is an object formed by additive manufacturing, which is provided at a position separated from the solidified layer 65 and fixed to the base plate 61. In the embodiment, the measurement reference object 7 serves as the direct measurement target for understanding the positional misalignment of the base plate 61, and coordinates related to the measurement reference object 7 are acquired to measure the positional misalignment of the base plate 61 in the horizontal direction and the rotational direction. By using the measurement reference object 7 as the measurement target, the measurement position can be fixed regardless of the shape of the three-dimensional object, and the advantage of not having to remove or removing a minimum amount of the material at the measurement position can be enjoyed.

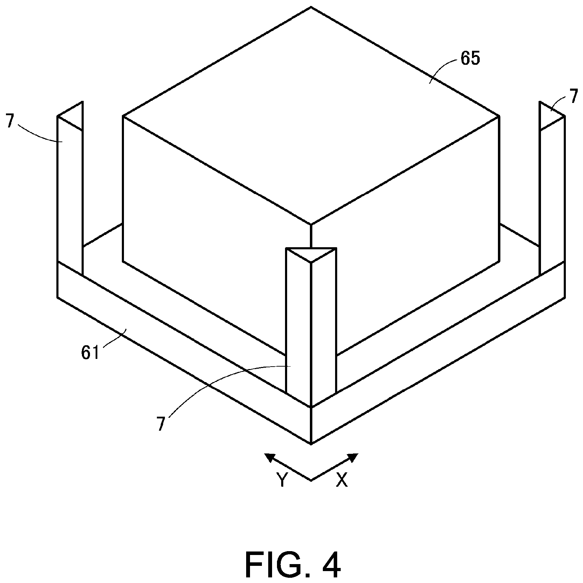

In the embodiment, the irradiator 3 forms the measurement reference object 7 on the base plate 61 by irradiating the material layer 63 to melt or sinter the material layer 63, similar to the formation of the solidified layer 65. The formation of the measurement reference object 7 is performed simultaneously with the formation of the solidified layer 65. That is, when forming the solidified layer 65 of the n^{th} layer, the measurement reference object 7 of the n^{th} layer is also formed. The laser irradiation condition related to the measurement reference object 7 may be the same as or different from the laser irradiation condition related to the solidified layer 65. To increase the accuracy of measurement, multiple measurement reference objects 7 may be provided and the coordinates related to the respective measurement reference objects 7 are acquired. In the embodiment, as shown in FIG. 4, the measurement reference objects 7 are respectively formed at three corners of the base plate 61 having a rectangular shape.

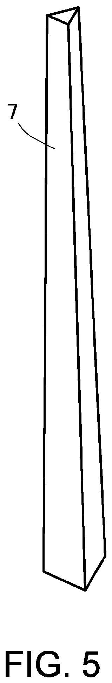

The shape of the measurement reference object 7 is not particularly limited, and any shape such as a polygonal prism shape, a cylindrical shape, a polygonal pyramid shape, a conical shape, etc., can be adopted. In the case where the cutting process is performed on the measurement reference object 7 as described later, the measurement reference object 7 only needs to have a strength sufficient to withstand the cutting process. In the embodiment, the measurement reference object 7 has a triangular prism shape. Also, as shown in FIG. 5, the measurement reference object 7 may be configured to be gradually tapered toward the upper direction, like a triangular pyramid shape. With such configuration, the measurement reference object 7 can be firmly fixed to the base plate 61 while reducing the material used for forming the measurement reference object 7.

The measuring device 49 may measure the coordinates related to a reference mark 71 or a reference surface 72 formed on the upper part of the measurement reference object 7 as the coordinates of the measurement reference object 7. The reference mark 71 can be suitably measured by the measuring device 49 which is an optical sensor. The reference surface 72 can be suitably measured by the measuring device 49 which is an optical sensor or a touch sensor.

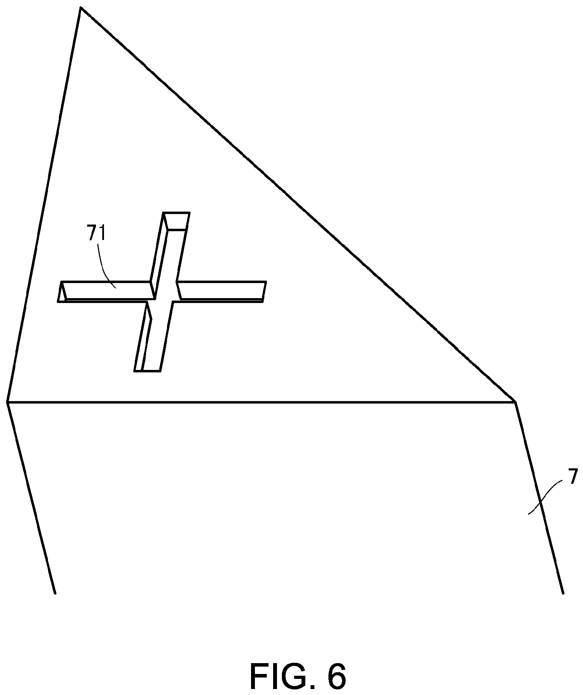

The reference mark 71 is a mark having a shape that enables to identify coordinates related to a predetermined point formed on the upper surface of the measurement reference object 7, as shown in FIG. 6. The shape of the reference mark 71 may be a combination of line segment shapes such as a cross shape or an X shape, and the measuring device 49 may measure the coordinates related to the intersection point of the line segment shapes as the coordinates related to the measurement reference object 7. More precisely, since the line segment shapes forming the reference mark 71 have thickness, the intersection point of lines passing through the center of the line segment shapes may be considered as the intersection point of the line segment shapes. Also, the shape of the reference mark 71 may be a circular shape or a polygonal shape, and the measuring device 49 may measure the coordinates of the center, such as the center of gravity of the reference mark 71, as the coordinates related to the measurement reference object 7. The reference mark 71 may be formed by cutting the upper part of the measurement reference object 7 by using the processing device 4. Also, the reference mark 71 may be in a shape formed by the irradiator 3. That is, in forming the measurement reference object 7, selective irradiation of the laser beam L or the electron beam may be performed to form the reference mark 71. The reference mark 71 may be formed as a concave part or a convex part, but the reference mark 71 may be a shallow concave part to the extent that additive manufacturing of the measurement reference object 7 can continue on the reference mark 71.

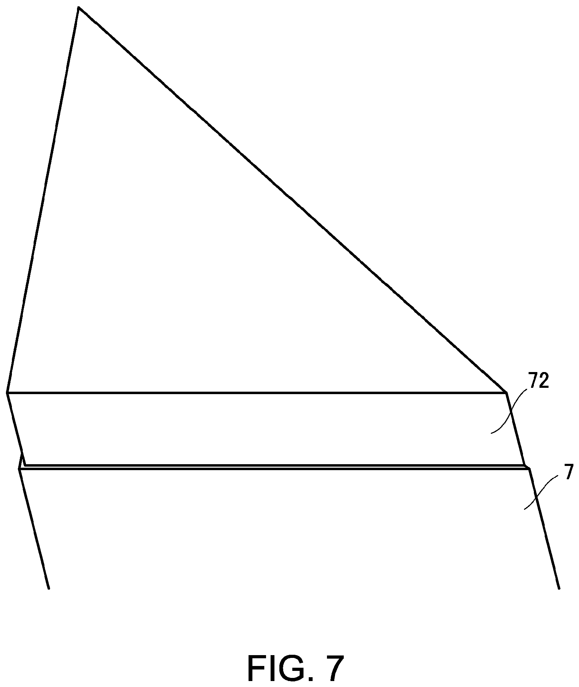

The reference surface 72 is a surface located on the side surface of the upper part of the measurement reference object 7, as shown in FIG. 7. The reference surface 72 may be formed by cutting the end face of the measurement reference object 7 by using the processing device 4. However, if a sufficiently smooth surface is obtained at the time of manufacturing using the irradiator 3, the side surface of the measurement reference object 7 may be used as the reference surface 72 without cutting. Also, even if unevenness occurs on the side surface of the measurement reference object 7, a line approximating the upper end of the side surface may be calculated by regression analysis such as the least squares method, and coordinates on the line may be considered as the coordinates of the reference surface 72.

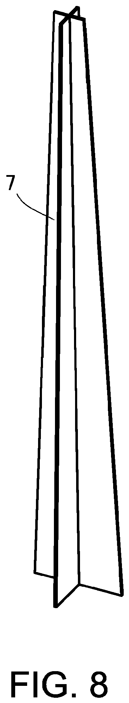

The measurement reference object 7 may have a shape combining multiple plate-like shapes. The measurement reference object 7 shown in FIG. 8 has a shape combining two plate-like shapes, and the measuring device 49 may measure the coordinates related to the intersection point of the plate-like shapes, that is, the coordinates related to the intersection point of the cross shape in the top view, as the coordinates related to the measurement reference object 7. More precisely, the intersection point of lines passing through the center of the line segment shapes constituting the cross shape may be considered as the coordinates related to the measurement reference object 7. With such a measurement reference object 7, cutting of the measurement reference object 7 is unnecessary, and the material used for forming the measurement reference object 7 can be reduced. Also, since the area adhering to the base plate 61 can be made smaller, removal is easier. The thickness of the plate-like shape may be equivalent to the spot diameter of the laser beam L or the electron beam.

The measurement reference object 7 may be cut and removed from the base plate 61 by performing a mechanical process such as wire electrical discharge processing after the completion of additive manufacturing. Also, in the case of using the measurement reference object 7 with a relatively small adhesion force to the base plate 61, as shown in FIG. 8, the measurement reference object 7 may be pressed to be separated from the base plate 61.

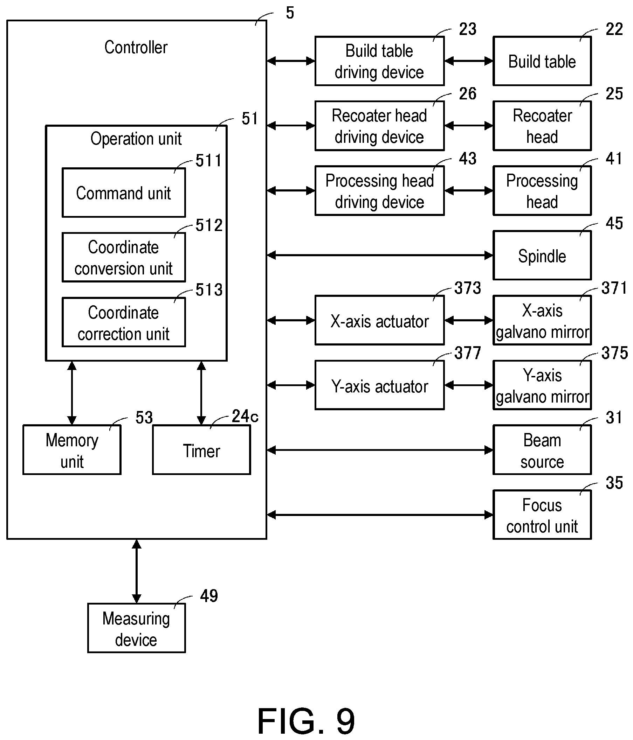

The controller 5 controls each part of the additive manufacturing apparatus 1 based on the manufacturing program. Also, the controller 5 performs coordinate system correction based on the positional misalignment of the base plate 61 in the horizontal direction or the rotational direction measured by the measuring device 49. As shown in FIG. 9, the controller 5 includes an operation unit 51 and a memory unit 53. The controller 5 may be configured by combining any hardware and software. The operation unit 51 is, for example, a processing device such as a CPU. The operation unit 51 has a command unit 511, a coordinate conversion unit 512, and a coordinate correction part 513. Each unit may be configured by electronic circuitry. The memory unit 53 can be configured by freely combining a RAM, a ROM, an auxiliary storage device, etc. The controller 5 may be configured by combining multiple control devices. For example, a control device that performs control related to the irradiator 3 and a control device that controls other devices may be configured separately.

The command unit 511 controls each part according to a manufacturing program, etc. Specifically, the command unit 511 outputs control commands to the build table driving device 23 and the recoater head driving device 26, and controls the material layer former 2 and the build table 22 to form the material layer 63. Also, the command unit 511 outputs control commands to the beam source 31, the focus control unit 35, the X-axis actuator 373, and the Y-axis actuator 377, and controls the irradiator 3 to form the solidified layer 65. At this time, the command unit 511 refers to the correction data of the coordinate system and applies correction to the control commands. Also, the command unit 511 outputs control commands to the processing head driving device 43 and the spindle 45, and controls the processing device 4 to perform the cutting process on the solidified layer 65 and the measurement reference object 7. At this time, the command unit 511 refers to the correction data of the coordinate system and applies correction to the control commands. Also, the command unit 511 controls the measuring device 49. The command unit 511 may correct the control command based on the predicted value of the thermal displacement amount according to the temperature of the build table 22 when controlling the irradiator 3 and the processing device 4.

The coordinate conversion unit 512 analyzes and digitizes data related to the coordinates measured by the measuring device 49. The coordinate correction part 513 calculates the amount of misalignment in the horizontal direction and the rotational direction of the base plate 61 from the digitized coordinate data, and generates coordinate system correction data.

The memory unit 53 stores data necessary for control such as the manufacturing program, data necessary to be stored during the operational process performed by the operation unit 51, and the coordinate system and correction data thereof.

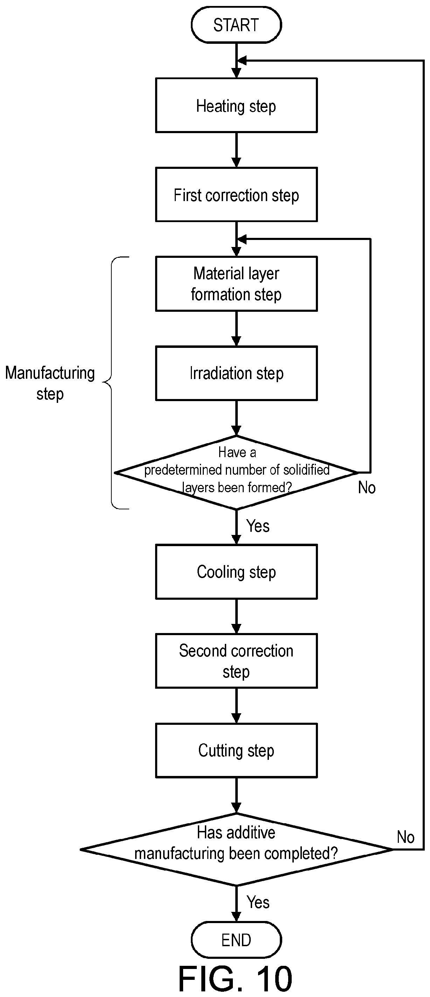

Here, the additive manufacturing method of the embodiment shown in FIG. 10 will be described. The additive manufacturing method of the embodiment includes a heating step, a first correction step, a manufacturing step, a cooling step, a second correction step, and a cutting step, and manufactures a desired three-dimensional object by repeating the steps in sequence.

Before starting additive manufacturing, the base plate 61 is placed on the build table 22 and fixed to the build table 22 by any fixing toolss. At this time, in general, the temperature of the build table 22 is room temperature. The positions and the number of fixing positions are not particularly limited. According to the embodiment, since the positional misalignment of the base plate 61 is tolerated to a certain extent, the positions and number of the fixing positions can be set relatively freely. After the base plate 61 is fixed, the chamber 11 is sealed, and inert gas is supplied. During additive manufacturing, the chamber is maintained under an inert gas atmosphere of a predetermined concentration. Also, before proceeding to the heating step, the origin of the coordinate system and X-axis and Y-axis are set. The origin of the coordinate system may be the center of the base plate 61. Also, when the base plate 61 has a rectangular shape, each side of the base plate 61 may be parallel to X-axis or Y-axis. The end surface of the base plate 61 may be measured by using the measuring device 49 when the origin and X-axis and Y-axis are set.

Firstly, the heating step is performed. In the heating step, the build table 22 is heated to the preheating temperature by using the thermal adjuster 24. The temperature of the build table 22 is maintained at the preheating temperature until the next cooling step begins.

After the heating step and before the manufacturing step, the first correction step is performed. In the first correction step, the positional misalignment in the horizontal direction and the rotational direction of the base plate 61 is measured by using the measuring device 49, and the coordinate system used in the manufacturing step, that is, the coordinate system used for controlling the irradiator 3, is corrected. In the case where the optical coordinate system and the cutting coordinate system are provided separately, the coordinate system corrected in the first correction step may be the optical coordinate system only. The detailed procedure of the first correction step will be described later. However, in the case where the measurement reference object 7 or the solidified layer 65 is used as the measurement target, since the measurement reference object 7 and the solidified layer 65 are not formed at the time point immediately after the first heating step, the first correction step immediately after the first heating step may be performed using the base plate 61 as the measurement target. In other words, the first correction step for the first time may use the base plate 61 as the measurement target, and the first correction step since the second time may use the measurement target as the measurement reference object 7 or the solidified layer 65.

During implementation of the first correction step, when the measurement position is buried in the material, the material at the measurement position may be removed by the removal nozzle 47 before the measurement performed by the measuring device 49.

Next, the manufacturing step is performed. The manufacturing step involves alternately repeating the material layer formation step and the irradiation step, and a predetermined number of the solidified layers 65 and the reference marks 7 are manufactured. In the material layer formation step, the build table 22 is positioned at a predetermined height, and the recoater head 25 moves over the build table 22. Thus, the material is supplied onto the build table 22 and leveled by the blade 27, and the material layer 63 is formed. In the irradiation step, the laser beam L or the electron beam is irradiated based on the coordinate system onto the material layer 63 heated to the preheating temperature, and the solidified layer 65 is formed. Also, in the irradiation step, the measurement reference object 7 is also manufactured in parallel with the manufacturing of the solidified layer 65. That is, the laser beam L or the electron beam is irradiated onto the material layer 63 at a position separated from the solidified layer 65, and the measurement reference object 7 fixed to the base plate 61 is formed.

In the case of forming the reference mark 71 or the reference surface 72 on the measurement reference object 7 by performing the cutting process, after the manufacturing step and before the cooling step, the cutting process is performed on the measurement reference object 7. When performing the cutting process on the measurement reference object 7, the material around the portion where the cutting process is performed, that is, the material at the measurement position, may be removed by the removal nozzle 47.

After a predetermined number of the solidified layers 65 are manufactured, the cooling step is performed. In the cooling step, the build table 22 is cooled to the cooling temperature by the thermal adjuster 24. The temperature of the build table 22 is maintained at the cooling temperature until the next heating step begins.

After the cooling step and before the cutting step, the second correction step is performed. In the second correction step, the positional misalignment in the horizontal direction and the rotational direction of the base plate 61 is measured by using the measuring device 49, and the coordinate system used in the cutting step, that is, the coordinate system used for controlling the processing device 4, is corrected. In the case where the optical coordinate system and the cutting coordinate system are provided separately, the coordinate system corrected in the second correction step may be the cutting coordinate system only. The detailed procedure of the second correction step will be described later.

During implementation of the second correction step, when the measurement position is buried in the material, the material at the measurement position may be removed by the removal nozzle 47 before the measurement performed by the measuring device 49. However, as mentioned above, in the case of performing the cutting process on the measurement reference object 7, the removal of the material at the measurement position may be performed at the time point of the cutting process.

Next, the cutting step is performed. In the cutting step, the cutting process is performed based on the coordinate system on the end face of the solidified layer 65 cooled to the cooling temperature. With the cutting step, a more precise three-dimensional object is obtained.

In this way, the heating step, the first correction step, the manufacturing step, the cooling step, the second correction step, and the cutting step are repeated, and a desired three-dimensional object is manufactured. With the heating step and the cooling step, positional misalignment in the horizontal direction or the rotational direction may occur between the build table 22 and the base plate 61, but, by correcting the coordinate system each time through the first correction step and the second correction step, additive manufacturing can be continued while suppressing the effects of positional misalignment.

The first correction step is performed after the heating step is completed, and the second correction step is performed after the cooling step is completed, and whether the temperature adjustment related to the heating step or the cooling step is completed may be determined, for example, as follows. The elapsed time from the start of the temperature adjustment may be measured by the timer 24c, and the temperature adjustment is determined as completed at the time point when a predetermined time has elapsed. Also, the temperature of the measurement reference object 7, the solidified layer 65, or the build table 22 may be measured by a contact or contactless temperature sensor, and the temperature adjustment may be determined as completed at the time point when a predetermined temperature is reached. Also, any position of the measurement reference object 7 or the solidified layer 65 may be measured by the measuring device 49, and the temperature adjustment may be determined as completed at the time point when the variation in position falls below a threshold.

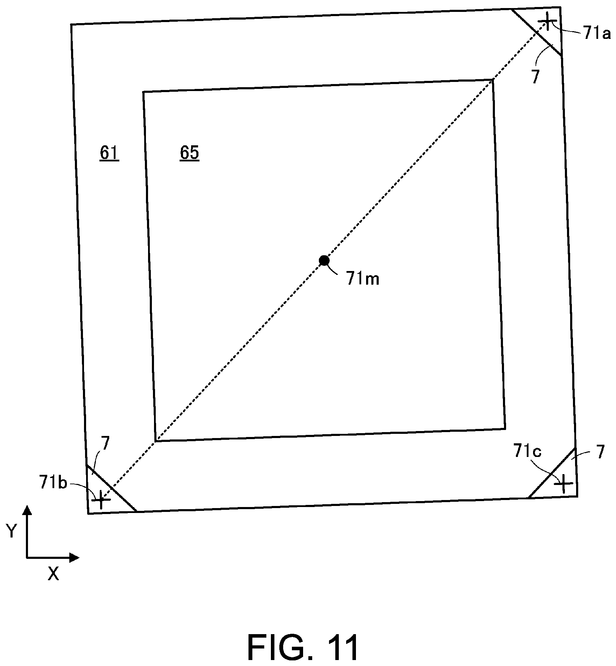

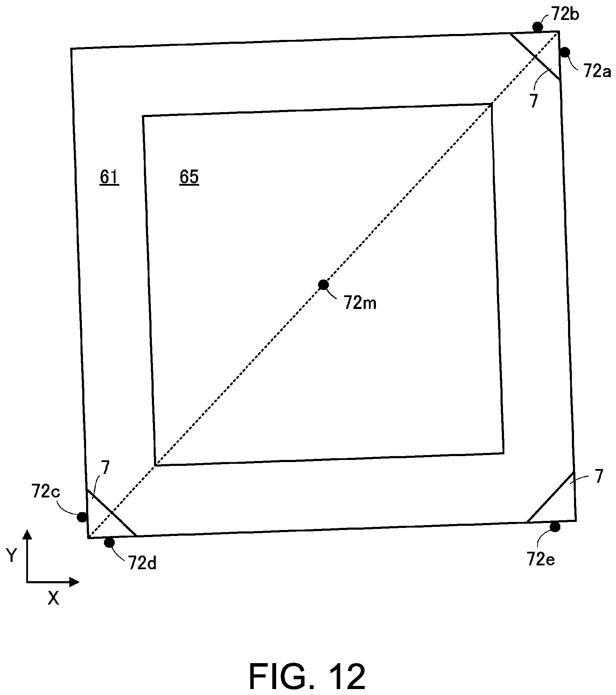

Here, the procedures of the first correction step and the second correction step are described in detail. FIG. 11 and FIG. 12 are both top views of the measurement reference object 7, the base plate 61, and the solidified layer 65, and exemplify the measurement positions in the case of measuring each reference mark 71 and the measurement positions in the case of measuring the reference surface 72, respectively.

In the embodiment, the measurement reference objects 7 are respectively formed at three corners of the base plate 61 having a rectangular shape. In addition, the measuring device 49 acquires the coordinates related to two measurement reference objects 7 positioned diagonally to measure the positional misalignment in the horizontal direction, and acquires the coordinates related to two measurement reference object 7 positioned at both ends on the same side to measure the positional misalignment in the rotational direction. More specifically, the coordinates of two measurement reference objects 7 positioned diagonally are acquired, and the midpoint thereof is calculated based on the coordinates. The measured values of the coordinates of the midpoint and the target values in the control are compared, the deviation is set as the amount of positional misalignment in the horizontal direction, and the correction data for the coordinate system is created. According to the correction data, the origin of the coordinate system in the control is shifted by an amount equivalent to the amount of positional misalignment in the horizontal direction. Even if the base plate 61 has expanded or contracted as a whole, the center part of the base plate 61 is hardly affected by the expansion or contraction. Therefore, by taking the midpoint of the coordinates of the two measurement reference objects 7 positioned diagonally, the amount of positional misalignment in the horizontal direction can be grasped more accurately. By taking the midpoint of the coordinates of the two measurement reference objects 7 positioned diagonally, even if the base plate 61 has expanded or contracted as a whole, the amount of positional misalignment in the horizontal direction can be grasped more accurately. In addition, coordinates related to the two measurement reference objects 7 positioned at both ends of the same side are acquired, and the slope of the line passing through the coordinates, and hence the angle, is calculated. The measured value of the angle and the target value in the control are compared, and the deviation is set as the amount of positional misalignment in the rotational direction, and correction data for the coordinate system is created. According to the correction data, the angle of the coordinate axis in the control is shifted by the amount equivalent to the amount of positional misalignment in the rotational direction.

In the embodiment shown in FIG. 11, the reference marks 71 related to the measurement reference objects 7 positioned diagonally are set as a first reference mark 71a and a second reference mark 71b, and the reference marks 71 related to the measurement reference objects 7 positioned at both ends of the same side are set as a second reference mark 71b and a third reference mark 71c. The coordinates of the first reference mark 71a and the second reference mark 71b are acquired, and, based on the coordinates of a midpoint 71m thereof, the amount of positional alignment in the horizontal direction is calculated. Additionally, the coordinates of the second reference mark 71b and the third reference mark 71c are acquired, and, based on the angle of the line passing through the second reference mark 71b and the third reference mark 71c, the amount of misalignment in the rotational direction is calculated. In this way, in the first correction step and the second correction step, correction data of the coordinate system is created based on the amount of positional misalignment in the horizontal direction and the rotational direction of the base plate 61.

In the embodiment shown in FIG. 12, the measurement positions of the reference surfaces 72 related to the measurement reference objects 7 positioned diagonally are set as measuring points 72a, 72b and measuring points 72c, 72d, and the measurement positions of the reference surfaces 72 related to the measurement reference objects 7 positioned at both ends of the same edge are set as measuring point 72d and measuring point 72e. The coordinates of the measuring points 72a, 72b and the measuring points 72c, 72d are acquired, and, based on the coordinates of the midpoints 72m thereof, the misalignment amount in the horizontal direction is calculated. Additionally, the coordinates of the measuring point 72d and the measuring point 72e are acquired, and based on the angle of the line passing the measuring point 72d and the measuring point, the misalignment amount in the rotational direction is calculated. In this way, in the first correction step and the second correction step, correction data of the coordinate system is created based on the amount of positional misalignment in the horizontal direction and the rotational direction of the base plate 61.

The invention is not limited to the configurations of the embodiments shown in the drawings, as already specifically shown in several examples, and various modifications or applications are possible within the scope that does not deviate from the technical concept of the invention.

## Claims

1. An additive manufacturing method, comprising:
a heating step of heating a build table (22) to which a base plate (61) is fixed to a preheating temperature;
a manufacturing step of alternately and repetitively forming a material layer (63) by supplying a material onto the build table (22) to form a material layer (63) and forming a solidified layer (65) by irradiating the material layer (63) heated to the preheating temperature with a laser beam (L) or an electron beam to form a predetermined number of the solidified layers (65);
a cooling step of cooling the build table (22) to a cooling temperature lower than the preheating temperature;
a cutting step of performing a cutting process on an end surface of the solidified layer (65) cooled to the cooling temperature;
a first correction step of measuring, by using a measuring device (49), positional misalignments of the base plate (61) in a horizontal direction and a rotational direction and correcting a coordinate system used in the manufacturing step, wherein the first correction step is executed after the heating step and before the manufacturing step; and
a second correction step of measuring, by using the measuring device (49), positional misalignments of the base plate (61) in the horizontal direction and the rotational direction and correcting a coordinate system used in the cutting step, wherein the second correction step is executed after the cooling step and before the cutting step.

2. The additive manufacturing method as claimed in claim 1, wherein, in the manufacturing step, the laser beam (L) or the electron beam is irradiated to the material layer (63) at a position separated from the solidified layer (65), and a measurement reference object (7) fixed to the base plate (61) is formed, and
the measuring device (49) is configured to acquire coordinates related to the measurement reference object (7) to be able to measure the positional misalignment of the base plate (61).

3. The additive manufacturing method as claimed in claim 2, wherein the base plate (61) has a rectangular shape, and
the measurement reference object (7) is formed at each of three corners of the rectangular shape.

4. The additive manufacturing method as claimed in claim 3, wherein the measuring device (49) is configured to acquire coordinates related to two of the measurement reference objects (7) positioned diagonally to be able to measure the positional misalignment in the horizontal direction and acquire coordinates related to two of the measurement reference objects (7) positioned at two ends on a same side to be able to measure the positional misalignment in the rotational direction.

5. The additive manufacturing method as claimed in any one of claims 2 to 4, wherein the measuring device (49) acquires coordinates of a reference mark (71) formed on an upper surface of the measurement reference object (7).

6. The additive manufacturing method as claimed in claim 5, wherein, after the manufacturing step and before the cooling step, the reference mark (71) is formed by performing a cutting process on the upper surface of the measurement reference object (7).

7. The additive manufacturing method as claimed in claim 5, wherein the reference mark (71) is in a shape manufactured in the manufacturing step.

8. The additive manufacturing method as claimed in any one of claims 2 to 4, wherein the measuring device (49) acquires coordinates of a reference surface (72) positioned on a side surface of the measurement reference object (7).

9. The additive manufacturing method as claimed in claim 8, wherein, after the manufacturing step and before the cooling step, the reference surface (72) is formed by performing a cutting process on an end surface of the measurement reference object (7).

10. The additive manufacturing method as claimed in any one of claims 1 to 9, wherein the material at a measurement position of the measuring device (49) is removed before measurement.

11. The additive manufacturing method as claimed in claim 10, wherein the material is removed through suction or injection of an inert gas.

12. The additive manufacturing method as claimed in any one of claims 1 to 11, wherein the measuring device (49) comprises an optical sensor.

13. The additive manufacturing method as claimed in any one of claims 1 to 11, wherein the measuring device (49) comprises a touch sensor.

14. The additive manufacturing method as claimed in any one of claims 1 to 13, wherein the preheating temperature is higher than a martensitic transformation finish temperature of the solidified layer (65), and
the cooling layer is lower than a martensitic transformation start temperature of the solidified layer (65).

15. The additive manufacturing method as claimed in any one of claims 1 to 14, wherein the cooling temperature is room temperature.

16. An additive manufacturing apparatus, comprising:
a build table (22), to which a base plate (61) is fixed;
a thermal adjuster (24), heating the build table (22) to a preheating temperature or cooling the build table (22) to a cooling temperature lower than the preheating temperature;
a material layer former (2), supplying a material onto the build table (22) to form a material layer (63);
an irradiator (3), irradiating the material layer (63) heated to the preheating temperature with a laser beam (L) or an electron beam to form a solidified layer (65);
a processing device (4), performing a cutting process on an end surface of the solidified layer (65) cooled to the cooling temperature;
a measuring device (49), configured to be able to measure positional misalignments of the base plate (61) in a horizontal direction and a rotational direction; and
a controller (5), correcting a coordinate system used for control of the irradiator (3) based on the positional misalignment measured by the measuring device (49) from a time when the build table (22) is heated to the preheating temperature until a time when the solidified layer (65) is formed, and correcting a coordinate system used for control of the processing device (4) based on the positional misalignment measured by the measuring device (49) from a time when the build table (22) is cooled to the cooling temperature until a time when the cutting process is performed on an end surface of the solidified layer (65).

## Amended claims

### Amended claims in accordance with Rule 137(2) EPC.

1. An additive manufacturing method, comprising:
a heating step of heating a build table (22) to which a base plate (61) is fixed to a preheating temperature;
a manufacturing step of alternately and repetitively forming a material layer (63) by supplying a material onto the build table (22) to form a material layer (63) and forming a solidified layer (65) by irradiating the material layer (63) heated to the preheating temperature with a laser beam (L) or an electron beam to form a predetermined number of the solidified layers (65);
a cooling step of cooling the build table (22) to a cooling temperature lower than the preheating temperature;
a cutting step of performing a cutting process on an end surface of the solidified layer (65) cooled to the cooling temperature;
a first correction step of measuring, by using a measuring device (49), positional misalignments of the base plate (61) in a horizontal direction and a rotational direction and correcting a coordinate system used in the manufacturing step, wherein the first correction step is executed after the heating step and before the manufacturing step; and
a second correction step of measuring, by using the measuring device (49), positional misalignments of the base plate (61) in the horizontal direction and the rotational direction and correcting a coordinate system used in the cutting step, wherein the second correction step is executed after the cooling step and before the cutting step,
**characterized in that**
in the manufacturing step, the laser beam (L) or the electron beam is irradiated to the material layer (63) at a position separated from the solidified layer (65), and a measurement reference object (7) fixed to the base plate (61) is formed, and
the measuring device (49) is configured to acquire coordinates related to the measurement reference object (7) to be able to measure the positional misalignment of the base plate (61).

2. The additive manufacturing method as claimed in claim 1, wherein the base plate (61) has a rectangular shape, and
the measurement reference object (7) is formed at each of three corners of the rectangular shape.

3. The additive manufacturing method as claimed in claim 2, wherein the measuring device (49) is configured to acquire coordinates related to two of the measurement reference objects (7) positioned diagonally to be able to measure the positional misalignment in the horizontal direction and acquire coordinates related to two of the measurement reference objects (7) positioned at two ends on a same side to be able to measure the positional misalignment in the rotational direction.

4. The additive manufacturing method as claimed in any one of claims 1 to 3, wherein the measuring device (49) acquires coordinates of a reference mark (71) formed on an upper surface of the measurement reference object (7).

5. The additive manufacturing method as claimed in claim 4, wherein, after the manufacturing step and before the cooling step, the reference mark (71) is formed by performing a cutting process on the upper surface of the measurement reference object (7).

6. The additive manufacturing method as claimed in claim 4, wherein the reference mark (71) is in a shape manufactured in the manufacturing step.

7. The additive manufacturing method as claimed in any one of claims 1 to 3, wherein the measuring device (49) acquires coordinates of a reference surface (72) positioned on a side surface of the measurement reference object (7).

8. The additive manufacturing method as claimed in claim 7, wherein, after the manufacturing step and before the cooling step, the reference surface (72) is formed by performing a cutting process on an end surface of the measurement reference object (7).

9. The additive manufacturing method as claimed in any one of claims 1 to 8, wherein the material at a measurement position of the measuring device (49) is removed before measurement.

10. The additive manufacturing method as claimed in claim 9, wherein the material is removed through suction or injection of an inert gas.

11. The additive manufacturing method as claimed in any one of claims 1 to 10, wherein the measuring device (49) comprises an optical sensor.

12. The additive manufacturing method as claimed in any one of claims 1 to 10, wherein the measuring device (49) comprises a touch sensor.

13. The additive manufacturing method as claimed in any one of claims 1 to 12, wherein the preheating temperature is higher than a martensitic transformation finish temperature of the solidified layer (65), and
the cooling temperature is lower than a martensitic transformation start temperature of the solidified layer (65).

14. The additive manufacturing method as claimed in any one of claims 1 to 13, wherein the cooling temperature is room temperature.

15. An additive manufacturing apparatus, comprising:
a build table (22), to which a base plate (61) is fixed;
a thermal adjuster (24), heating the build table (22) to a preheating temperature or cooling the build table (22) to a cooling temperature lower than the preheating temperature;
a material layer former (2), supplying a material onto the build table (22) to form a material layer (63);
an irradiator (3), irradiating the material layer (63) heated to the preheating temperature with a laser beam (L) or an electron beam to form a solidified layer (65);
a processing device (4), performing a cutting process on an end surface of the solidified layer (65) cooled to the cooling temperature;
a measuring device (49), configured to be able to measure positional misalignments of the base plate (61) in a horizontal direction and a rotational direction; and
a controller (5), correcting a coordinate system used for control of the irradiator (3) based on the positional misalignment measured by the measuring device (49) from a time when the build table (22) is heated to the preheating temperature until a time when the solidified layer (65) is formed, and correcting a coordinate system used for control of the processing device (4) based on the positional misalignment measured by the measuring device (49) from a time when the build table (22) is cooled to the cooling temperature until a time when the cutting process is performed on an end surface of the solidified layer (65),
**characterized in that**
the irradiator (3) is configured to irradiate the material layer (63) at a position separated from the solidified layer (65) with the laser beam (L) or the electron beam, and form a measurement reference object (7) fixed to the base plate (61), and
the measuring device (49) is configured to acquire coordinates related to the measurement reference object (7) to be able to measure the positional misalignment of the base plate (61).
